# EUROPÄISCHE PATENTSCHRIFT

(11) **EP 0 830 974 B1**
(45) Veröffentlichungstag und Bekanntmachung des Hinweises auf die Patenterteilung: **23.10.2002**
(21) Anmeldenummer: 97112182.7
(22) Anmeldetag: 16.07.1997
(51) Int. Cl.: B60N 3/10

(54) **Haltevorrichtung für einen Getränkebehälter**
Holder for beverage receptacle
Dispositif de support d'un réceptacle de boissons

(30) Priorität: 11.09.1996 DE 19636825
(43) Veröffentlichungstag der Anmeldung: 25.03.1998
(73) Patentinhaber: fischerwerke Artur Fischer GmbH & Co. KG, 72178 Waldachtal (DE); DaimlerChrysler AG, 70567 Stuttgart (DE)
(72) Erfinder: Plocher, Bernd, 72108 Rottenburg-Seebronn (DE); Sinner, Michael, 72108 Rottenburg-Seebronn (DE); Kruse, Martin, 71065 Sindelfingen (DE)

(56) Entgegenhaltungen:
- DE-A- 4 302 948
- DE-A- 4 423 097
- US-A- 5 259 580
- PATENT ABSTRACTS OF JAPAN vol. 018, no. 589 (M-1701), 10. November 1994 & JP 06 219202 A (NISSAN MOTOR CO LTD), 9. August 1994

## Beschreibung

Die Erfindung betrifft eine Haltevorrichtung für einen Getränkebehälter, die zur Anbringung in einer Mittelkonsole eines Personenkraftwagens vor einem Gangschalt- oder Gangwählhebel vorgesehen ist, mit den bekannten Merkmalen des Oberbegriffs des Anspruchs 1.

Es sind Haltevorrichtungen bekannt, die zum Einbau in ein Armaturenbrett eines Personenkraftwagens vorgesehen sind. Diese weisen einen Halter auf, der nach Art einer Schublade im Armaturenbrett geführt und in eine Haltestellung ausfahrbar ist, in der der Halter aus dem Armaturenbrett in einen Fahrgastraum des Personenkraftwagens herausragt. Dadurch wird eine Aufnahme im Halter, die zum Einstellen eines Getränkebehälters vorgesehen ist, frei zugänglich. Wird der Halter nicht benötigt, läßt er sich in eine Grundstellung einschieben, in der er zum Fahrgastraum hin bündig mit dem Armaturenbrett abschließt.

Soll eine derartige Haltevorrichtung verhältnismäßig nieder, d. h. in Höhe eines Gangschalt- (Schaltgetriebe) oder Gangwählhebels (Automatikgetriebe) angebracht werden, so kann sie, abhängig vom Abstand des Gangschalt- oder Gangwählhebels von der Mittelkonsole der Gangschalt- oder Gangwählhebel, wenn er nach vorn zur Mittelkonsole hin bewegt wird, mit dem Halter kollidieren, wenn letzterer sich in seiner ausgefahrenen Haltestellung befindet. Die bekannten Haltevorrichtungen haben somit den Nachteil, daß sie in einer Mittelkonsole eines Personenkraftwagens nur dann untergebracht werden können, wenn sie in einer Höhe oberhalb des Gangschalt- oder Gangwählhebels angeordnet werden oder wenn der Abstand zwischen Gangschalt- oder Gangwählhebel von der Mittelkonsole ausreichend groß ist.

Aus der DE-A-44 23 097 ist eine Haltevorrichtung bekannt, deren Halter zwei Teile aufweist, die um eine vertikale Achse schwenkbar miteinander verbunden sind. Ein inneres Teil des Halters ist schubladenartig verschiebbar geführt, ein äußeres Teil des Halters wird federbetätigt zur Seite geschwenkt, wenn das innere Teil ausgefahren ist. Während des Ausfahrens sind die beiden Teile durch ein Gehäuse gerade zueinander ausgerichtet, der Halter der bekannten Haltevorrichtung läßt sich deswegen nicht vollständig ausfahren, wenn ein Gangschalt- oder Gangwählhebel im Weg sind. Wird bei ausgefahrenem Halter und zur Seite geschwenktem äußeren Teil ein Gangschalt- oder Gangwählhebel nach vorn bewegt und befindet sich der Gangschalt- oder Gangwählhebel in dieser Stellung neben dem zur Seite geschwenkten äußeren Teil, läßt sich das äußere Teil des Halters der bekannten Haltevorrichtung nicht zurück in eine das innere Teil gerade verlängernde Stellung verschwenken und der Halter läßt sich nicht einschieben.

Der Erfindung liegt daher die Aufgabe zugrunde, eine Haltevorrichtung der eingangs genannten Art so auszubilden, daß ihr Halter in der ausgefahrenen Haltestellung und während des Ausfahrens beim Schalten eines Getriebes nicht mit dem Gangschalt- oder Gangwählhebel in Berührung kommt.

Diese Aufgabe wird erfindungsgemäß durch die Merkmale des Anspruchs 1 gelöst. Die Linearführung der erfindungsgemäßen Haltevorrichtung führt deren Halter beim Ausfahren zugleich auch zur Seite, vorzugsweise in einer bogenförmigen Bewegung. Der Halter ragt in seiner ausgefahrenen Haltestellung also schräg zu einer Seite, vorzugsweise zur Beifahrerseite, aus der Mittelkonsole heraus. Er ist um einen Winkel um eine gedachte vertikale Achse gegenüber seiner eingeschobenen Grundstellung verschwenkt. In der Grundstellung ist der Halter in etwa in Längsrichtung des Personenkraftwagens ausgerichtet, d. h. parallel zu Seitenflächen seines Einbauraums, so daß er nicht mehr Platz des Einbauraums einnimmt, als notwendig Ist. Die Seitwärtsbewegung des Halters wird so groß gewählt, daß der Gangschalt- oder Gangwählhebel in keiner Stellung mit dem Halter in Berührung kommt, und so klein, daß ein Beinfreiraum des Beifahrers bzw. eines Fahrers so wenig wie möglich eingeschränkt wird.

Da eine Frontfläche der Mittelkonsole üblicherweise schräg steht und der Einbauraum deswegen geneigt zu einer Horizontalebene ist, führt die Linearführung der Haltevorrichtung gemäß einer Ausführungsform der Erfindung den Halter aus der Grundstellung zunächst in einer ansteigenden, der Neigung des Einbauraums entsprechenden, also ansteigenden Richtung in eine horizontale Richtung bei Erreichen der Haltestellung. Der Halter wird also zusätzlich zu seiner Seitwärtsbewegung aus einer schräg nach oben verlaufenden Lage in der Grundstellung in eine horizontale Lage in der Haltestellung, und somit nach unten verschwenkt. Dadurch wird ein in die Aufnahme des Halters eingestellter Getränkebehälter, beispielsweise eine Getränkebüchse, eine Tasse oder ein Becher, in vertikaler Lage gehalten.

Die Führung ist bei einer Ausgestaltung der Erfindung als Dreipunktführung, beispielsweise an zwei einander diagonal gegenüberliegenden Längskanten sowie an einem rückwärtigen Ende des ausfahrbaren Halters ausgebildet. Die beiden Führungen an den Längskanten des Halters können Geradführungen sein. Als Führung am rückwärtigen Ende des Halters, die den Halter während des Ausfahrens zur Seite und in die Horizontale nach unten verschwenkt, ist bei einer Ausgestaltung der Erfindung eine ortsfeste Führungsbahn vorgesehen, die zumindest über einen Teil ihrer Länge in einem Winkel zur Längsrichtung des Halters in seiner Grundstellung verläuft und in die ein Führungselement des Halters eingreift. Der Winkel der Führungsbahn zur Längsrichtung des Halters kann sich über die Länge der Führungsbahn ändern. Die Führungsbahn verläuft also schräg zur Ausfahrrichtung des Halters und bewegt dadurch das in ihr geführte, rückwärtige Ende des Halters beim Ausfahren zur Seite. Dadurch wird der Halter zur Seite verschwenkt. Indem die Führungsbahn zusätzlich in Ausfahrrichtung ansteigend verläuft, wird der Halter aus seiner nach oben gerichteten Grundstellung beim Ausfahren in eine horizontale Lage in der Haltestellung verschwenkt.

Die Führungsbahn kann bei einer Ausgestaltung der Erfindung auch am Halter anstatt ortsfest vorgesehen sein, das in die Führungsbahn eingreifende Führungselement ist dann ortsfest angebracht.

Vorzugsweise wird der Halter von einem Federelement in die Haltestellung ausgefahren und gegen die Kraft des Federelements wieder in die Grundstellung eingeschoben . Eine Verriegelungsvorrichtung, beispielsweise mittels einer an sich bekannten Herzkurve, hält den Halter gegen die Kraft des Federelements in seiner Grundstellung. Durch Drücken gegen eine Frontseite des Halters in der Grundstellung wird der Halter entriegelt.

Um den von der erfindungsgemäßen Haltevorrichtung eingenommenen Einbauraum klein zu halten, wird der Halter vorzugsweise schmaler ausgeführt, als der Durchmesser eines Getränkebehälters, der zum Einstellen in die Aufnahme des Halters vorgesehen ist. Der Halter umgreift einen eingestellten Getränkebehälter also nur teilweise. Um einen Getränkebehälter trotzdem sicher zu halten, ist bei einer Ausgestaltung der Erfindung ein Haltearm vorgesehen, der zur Seite herausbewegbar, beispielsweise schwenkbar, am Halter angebracht ist. Dieser Haltearm bewegt sich beim Ausfahren des Halters beispielsweise federbetätigt zur Seite aus dem Halter heraus und vervollständigt die Aufnahme des Halters zum Einstellen eines Getränkebehälters. Der Halter und damit zugleich die gesamte Haltevorrichtung können bei dieser Ausgestaltung der Erfindung halb so breit oder geringfügig breiter wie der Durchmesser eines in die Aufnahme einzustellenden Getränkebehälters ausgebildet sein.

Vorzugsweise bewegt sich der Haltearm zur selben Seite aus dem Halter heraus, zu der der Halter beim Ausfahren verschwenkt, um den durch die Seitwärtsbewegung des Halters beim Ausfahren gewonnenen Freiraum für den Gangschalt- oder Gangwählhebel nicht zu verkleinern.

Die Erfindung wird nachfolgend anhand eines in der Zeichnung dargestellten Ausführungsbeispiels näher erläutert. Es zeigen
- Figur 1: eine erfindungsgemäße Haltevorrichtung in perspektivischer Darstellung in ihrer Grundstellung;
- Figur 2: die Haltevorrichtung gemäß Figur 1 mit Ausbrüchen versehen in ihrer Haltestellung;
- Figur 3: eine Draufsicht auf die Haltevorrichtung aus Figur 1 im Bereich einer Führungsbahn; und
- Figur 4: einen Schnitt entlang der Führungsbahn gemäß Linie IV-IV in Figur 3.

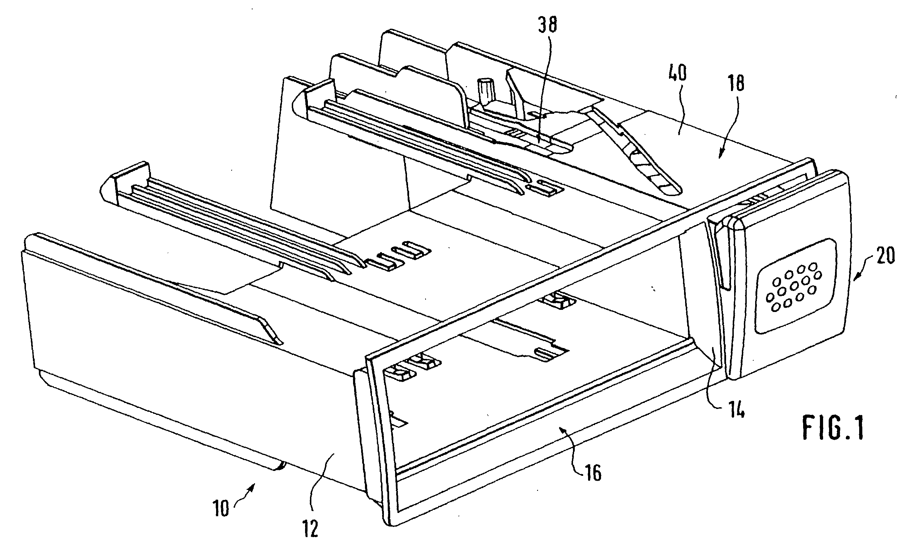

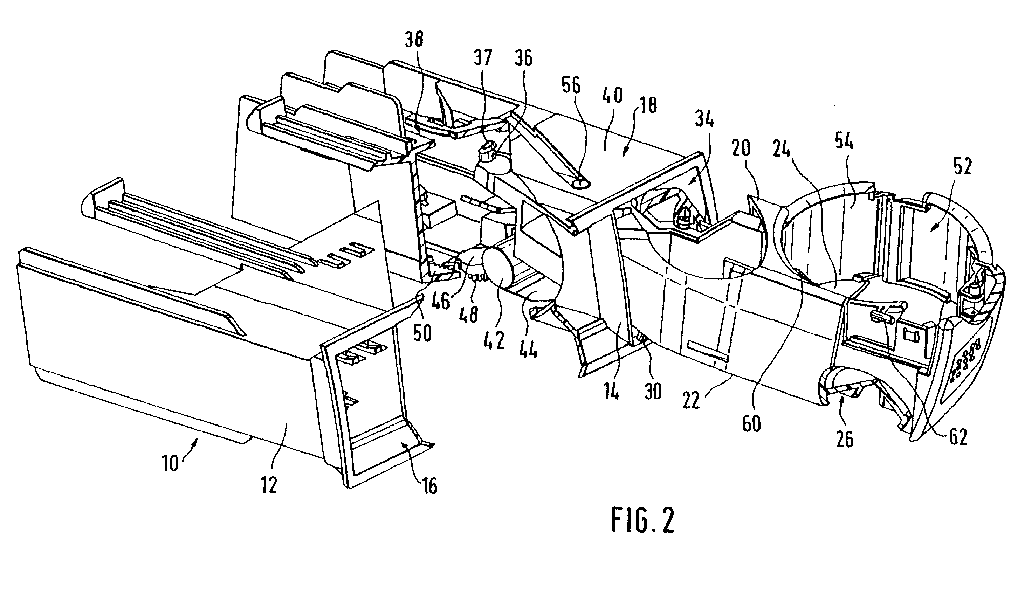

Die in Figuren 1 und 2 dargestellte, erfindungsgemäße Haltevorrichtung 10 für einen nicht dargestellten Getränkebehälter, wie beispielsweise eine Getränkebüchse, einen Becher oder eine Tasse, weist ein Gehäuse 12 aus Kunststoff-Spritzguß auf. Sie ist zum Einbau in eine Mittelkonsole eines Personenkraftwagens (nicht dargestellt) unterhalb eines Autoradios vorgesehen. Sie befindet sich somit in Höhe eines Gangschalt- oder Gangwählhebels und vor diesem. Das Gehäuse 12 ist zur Montage in einem normierten Einbauraum für ein Autoradio vorgesehen.

Das Gehäuse 12 ist durch eine Trennwand 14 unterteilt in ein Ablagefach 16, das ca. ¾ der Breite des Gehäuses 12 einnimmt, und einen Einbauraum 18 für einen Halter 20, der ca. ¼ der Breite des Gehäuses 12 einimmt.

Der Halter 20 ist ein längliches Kunststoff-Spritzgußteil, das nahezu so lang wie das Gehäuse 12 tief ist und das rechteckigen, nahezu quadratischen Querschnitt hat. Der Halter 20 ist aus einer Grundstellung, in der er vollständig in das Gehäuse 12 eingeschoben ist und bündig mit diesem abschließt (Figur 1), in eine Haltestellung nach Art einer Schublade ausfahrbar, in der er aus dem Gehäuse 12 herausragt (Figur 2). Der Halter 20 ist im Ausführungsbeispiel auf der rechten oder Beifahrerseite im Gehäuse 12 untergebracht.

Zum Ausfahren weist der Halter 20 eine Dreipunktlinearführung auf: Der Halter 20 weist zwei Geradführungen im Bereich seiner beiden unteren Längskanten 22 auf, von denen in der Zeichnung (Figur 2) nur eine linke sichtbar ist. Diese Geradführungen sind durch gerade Längsnuten 26 gebildet, die nahe der unteren Längskanten 22, 24 in eine Unterseite und in eine rechte Seite des Halters 20 eingeformt sind. In jede dieser beiden Längsnuten 26 greift je ein Zapfen 30 ein, der mit dem Gehäuse 12 einstückig ist und sich nahe einer Öffnung 34 des Gehäuses 12 befindet, aus der der Halter 20 ausfahrbar ist.

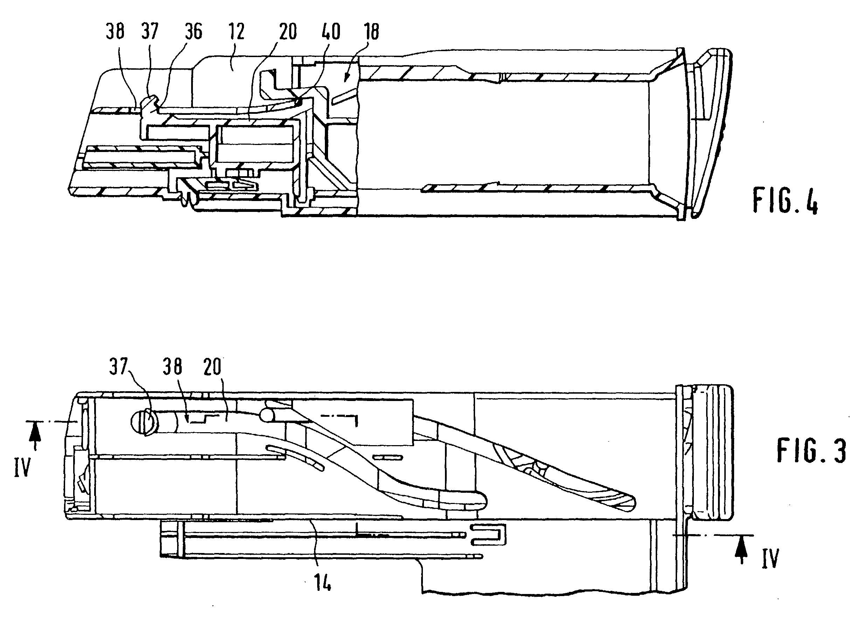

Als dritten Führungspunkt Weist der Halter 20 an seinem rückwärtigen Ende einen nach oben stehenden Zapfen 36 mit einem Kopf 37 auf, der einen Schlitz 38 durchgreift, welcher sich in einer oberen Wand 40 des Gehäuses 10 befindet. Der Kopf 37 des Zapfens 36 befindet sich oberhalb des Schlitzes 38 und hat größeren Durchmesser als der Schlitz 38 breit ist. Der Schlitz 38 bildet eine dritte Führungsbahn der Linearführung des Halters 20 (Figuren 3 und 4). Der Schlitz 38 verläuft von einem hinteren Ende des Gehäuses 12 bis ungefähr zu dessen vorderem Drittel und er verläuft S-förmig zunächst gerade entlang einer rechten Seite des Gehäuses 12, überquert anschließend mit geschwungenem Verlauf die Breite des Einbauraums 18 für den Halter 20 und endet mit geradem Verlauf entlang der Trennwand 14. Der S-förmige Verlauf des Schlitzes 38 über die Breite des Einbauraums 18 des Halters 20 bewirkt, daß das rückwärtige Ende des Halters 20, an dem sich der in den Schlitz 38 eingreifende Führungszapfen 36 befindet, beim Ausfahren des Halters 20 von der Grund- in die Haltestellung nach links verschwenkt, so daß ein vorderer Bereich des Halters 20, der in der Haltestellung aus dem Gehäuse 12 herausragt, nach rechts und damit zur Beifahrerseite hin verschwenkt, wenn der Halter 20 aus dem Gehäuse 12 ausfährt.

Die obere Wand 40 des Gehäuses 12, in der der Schlitz 38 angebracht ist, erhebt sich in Längsrichtung des Schlitzes 38 von hinten nach vorn, so daß daß rückwärtige Ende des Halters 20, auf dem sich der in den Schlitz 38 eingreifende Führungszapfen 36 des Halters 20 befindet, nach oben bewegt, wenn der Halter 20 ausfährt. Dadurch verschwenkt der in der Haltestellung aus dem Gehäuse 12 herausragende Teil des Halters 20 nach unten. Dies hat den Grund, daß der Einbauraum für die Haltevorrichtung 10 in der Mittelkonsole eines Personenkraftwagens üblicherweise geneigt zu einer horizontalen Ebene ist (beispielsweise um ca. 15°). Durch das Verschwenken nach unten gelangt der Halter 20 beim Ausfahren in eine horizontale Ebene. Ein rückwärtiger Teil des Halters 20, der in der Haltestellung im Gehäuse 12 verbleibt, ist sich verjüngend ausgebildet, so daß Freiraum zum Verschwenken des Halters 20 in seinem Einbauraum 18 im Gehäuse 12 besteht.

Am rückwärtigen Ende des Halters 20 ist ein Wickel 42 (Fig. 2) einer Rollfeder abrollbar aufgenommen, deren freies Ende 44 am Gehäuse 12 angebracht ist. Die Rollfeder 42 ist eine Zugfeder, die den Halter 20 in die Haltestellung ausfährt. Die Ausfahrbewegung wird mittels eines Flüssigkeits-Rotationsdämpfungselements 46 gedämpft, das an der Unterseite des Halters 20 angebracht ist und dessen Zahnrad 48 mit einer Zahnstange 50 des Gehäuses 12 kämmt. Eine in der Zeichnung nicht sichtbare, an sich bekannte Herzkurven-Verriegelungseinrichtung hält den Halter 20 in seiner in das Gehäuse 12 eingeschobenen Grundstellung gegen die Kraft der Rollfeder 42.

In seinem vorderen Bereich weist der Halter 20 eine näherungsweise halbzylindrische Einstellöffnung als Aufnahme 52 für einen einzustellenden Getränkebehälter auf. Der die Aufnahme 52 bildende Halbzylinder ist zur rechten und damit zur Beifahrerseite des Halters 20 hin offen, zu der der Halter 20 beim Ausfahren verschwenkt. Die Aufnahme 52 wird durch einen Haltearm 54 zu einem Vollzylinder vervollständigt, der in seinem vorderen Bereich halbkreisförmig ausgebildet ist. Der Haltearm 54 weist zwei Schwenkzapfen 56 an seinem hinteren Ende auf, die oben und unten im Halter 20 gelagert sind. Der Haltearm 54 ist dadurch zur rechten Seite aus dem Halter 20 herausschwenkbar an diesem gelagert, er läßt sich so weit herausschwenken, daß sein halbkreisförmiger vorderer Bereich die Aufnahme 52 für den Getränkebehälter zu einem Vollzylinder vervollständigt.

Die Herausschwenkbewegung des Haltearms 54 wird von einer in der Zeichnung nicht sichtbaren Schrauben-Torsionsfeder bewirkt. Beim Einschieben des Halters 20 in seine Grundstellung im Gehäuse 12 wird der Haltearm 54 von einer rechten Seitenwand des Gehäuses 12 in den Halter 20 hineingedrückt, so daß er seitlich nicht über den Halter 20 übersteht.

Zur Anpassung an Getränkebehälter verschiedenen Durchmessers weist die erfindungsgemäße Haltevorrichtung 10 eine Ausgleichsklappe 60 auf, die schwenkbar am Halter 20 gelagert ist und von einer Schraubentorsionsfeder 62 ins Innere der Aufnahme 52 gedrückt wird.

## Patentansprüche

1. Haltevorrichtung für einen Getränkebehälter, die zur Anbringung in einer Mittelkonsole eines Personenkraftwagens vor einem Gangschalt- oder Gangwählhebel vorgesehen ist, mit einem eine Linearführung aufweisenden, schubladenartig aus einer eingeschobenen Grundstellung in eine ausgefahrene Haltestellung ausfahrbaren Halter, der eine Aufnahme zum Einstellen des Getränkebehälters aufweist, **dadurch gekennzeichnet, daß** die Linearführung (26, 30, 36, 38) eine Schwenkbewegung des Halters (20) zur Seite bei der Ausfahrbewegung bewirkt.

2. Haltevorrichtung nach Anspruch 1, **dadurch gekennzeichnet, daß** die Linearführung (26, 30, 36, 38) eine Schwenkbewegung des Halters (20) nach unten bei der Ausfahrbewegung bewirkt.

3. Haltevorrichtung nach Anspruch 1, **dadurch gekennzeichnet, daß** der Halter (20) eine Dreipunktführung (26, 30, 36, 38) aufweist.

4. Haltevorrichtung nach Anspruch 1, **dadurch gekennzeichnet, daß** die Linearführung (26, 30, 36, 38) eine ortsfeste Führungsbahn (38) aufweist, die in einem Winkel zur Ausfahrrichtung des Halters (20) verläuft und in die ein Führungselement (36) des Halters (20) eingreift.

5. Haltevorrichtung nach Anspruch 1, **dadurch gekennzeichnet, daß** der Halter (20) eine Führungsbahn aufweist, die in einem Winkel zur Ausfahrrichtung des Halters (20) verläuft und in die ein ortsfestes Führungselement der Haltevorrichtung (10) eingreift.

6. Haltevorrichtung nach Anspruch 1, **dadurch gekennzeichnet, daß** die Haltevorrichtung (10) ein Federelement (42) aufweist, das den Halter (20) in die Haltestellung ausfährt.

7. Haltevorrichtung nach Anspruch 1, **dadurch gekennzeichnet, daß** die Haltevorrichtung (10) eine Verriegelungseinrichtung aufweist, die den Halter (20) in der Grundstellung verriegelt.

8. Haltevorrichtung nach Anspruch 1, **dadurch gekennzeichnet, daß** der Halter (20) schmaler als ein Durchmesser des in seine Aufnahme (52) einzustellenden Getränkebehälters ist.

9. Haltevorrichtung nach Anspruch 1, **dadurch gekennzeichnet, daß** die Aufnahme (52) des Halters (20) zum Einstellen des Getränkebehälters einen Haltearm (54) aufweist, der zur Seite herausbewegbar am Halter (20) angebracht ist und der einen in die Aufnahme (52) eingestellten Getränkebehälter zusammen mit dem Halter (20) umgreift.

10. Haltevorrichtung nach Anspruch 9, **dadurch gekennzeichnet, daß** der Haltearm (54) zu der Seite aus dem Halter (20) herausbewegbar ist, zu der der Halter (20) beim Ausfahren in die Haltestellung verschwenkt.

## Claims

1. Holding device for a drinks container, which holding device is provided for arrangement in a central console of a car in front of a gear-changing or gear-selecting lever, having a holder, which has a linear guide and which can be extended in the manner of a drawer from a pushed-in basic position into an extended holding position and which has a receptacle for the insertion of the drinks container, **characterised in that** the linear guide (26, 30, 36, 38) causes a swivelling movement of the holder (20) to the side during the extending movement.

2. Holding device according to claim 1, **characterised in that** the linear guide (26, 30, 36, 38) causes a swivelling movement of the holder (20) downwards during the extending movement.

3. Holding device according to claim 1, **characterised in that** the holder (20) has a three-point guide (26, 30, 36, 38).

4. Holding device according to claim 1, **characterised in that** the linear guide (26, 30, 36, 38) has a stationary guide track (38), which runs at an angle to the direction of extension of the holder (20) and into which a guide element (36) of the holder (20) engages.

5. Holding device according to claim 1, **characterised in that** the holder (20) has a guide track, which runs at an angle to the direction of extension of the holder (20) and into which a stationary guide element of the holding device (10) engages.

6. Holding device according to claim 1, **characterised in that** the holding device (10) has a spring element (42), which extends the holder (20) into the holding position.

7. Holding device according to claim 1, **characterised in that** the holding device (10) has a locking device, which locks the holder (20) in the basic position.

8. Holding device according to claim 1, **characterised in that** the holder (20) is narrower than a diameter of the drinks container to be inserted in its receptacle (52).

9. Holding device according to claim 1, **characterised in that,** for the insertion of the drinks container, the receptacle (52) of the holder (20) has a holding arm (54), which is so arranged on the holder (20) that it can be moved outwards to the side and which, together with the holder (20), grips around a drinks container inserted into the receptacle (52).

10. Holding device according to claim 9, **characterised in that** the holding arm (54) can be moved outwards from the holder (20) to the side to which the holder (20) swivels during extension into the holding position.

## Revendications

1. Dispositif de support pour un récipient à boissons, qui est prévu pour être placé sur une console centrale d'une voiture automobile devant un levier de changement de vitesse ou un levier sélecteur, avec un support présentant un guide linéaire, pouvant être sorti à la façon d'un tiroir d'une position de base rentrée dans une position de support sortie, support qui présente un logement pour le réglage du récipient à boissons, **caractérisé en ce que** le guide linéaire (26, 30, 36, 38) entraîne un mouvement basculant du support (20) sur le côté lors du mouvement de sortie.

2. Dispositif de support selon la revendication 1, **caractérisé en ce que** le guide linéaire (26, 30, 36, 38) entraîne un mouvement de basculement du support (20) vers le bas lors du mouvement de sortie.

3. Dispositif de support selon la revendication 1, **caractérisé en ce que** le support (20) présente un guide à trois points (26, 30, 36, 38).

4. Dispositif de support selon la revendication 1, **caractérisé en ce que** le guide linéaire (26,30,36,38) présente une glissière de guidage (38) fixe, qui forme un angle par rapport au sens de sortie du support (20) et dans laquelle s'engage un élément de guidage (36) du support (20).

5. Dispositif de support selon la revendication 1, **caractérisé en ce que** le support (20) présente une glissière de guidage qui forme un angle par rapport au sens de sortie du support (20) et dans laquelle s'engage un élément de guidage fixe du dispositif de support (10).

6. Dispositif de support selon la revendication 1, **caractérisé en ce que** le dispositif de support (10) présente un élément de ressort (42) qui sort le support (20) dans la position de support.

7. Dispositif de support selon la revendication 1, **caractérisé en ce que** le dispositif de support (10) présente un système de verrouillage qui verrouille le support (20) dans la position de base.

8. Dispositif de support selon la revendication 1, **caractérisé en ce que** le support (20) est plus étroit qu'un diamètre du récipient à boissons qui doit être ajusté dans son logement (52).

9. Dispositif de support selon la revendication 1, **caractérisé en ce que** le logement (52) du support (20) présente pour l'ajustage du récipient à boissons un bras de retenue (54), qui est disposé sur le support (20) de façon à pouvoir être sorti sur le côté et qui entoure un récipient à boissons ajusté dans le logement (52) en même temps que le support (20).

10. Dispositif de support selon la revendication 9, **caractérisé en ce que** le bras de support (54) peut être sorti sur le côté du support (20) vers lequel le support (20) bascule lors de la sortie dans la position de support.
